# FASCICULE DE BREVET EUROPEEN

(11) **EP 0 627 346 B1**
(45) Date de publication et mention de la délivrance du brevet: **15.04.1998**
(21) Numéro de dépôt: 94108530.0
(22) Date de dépôt: 03.06.1994
(51) Int. Cl.: B60S 1/24, F16C 11/04

(54) **Dispositif d'essuie-glace comportant une articulation entre une manivelle et une bielle**
Scheibenwischer mit Gelenkverbindung zwischen Kurbel und Gelenkstange
Windscreen wiper with a pivot between a crank and a link rod

(30) Priorité: 04.06.1993 FR 9306724
(43) Date de publication de la demande: 07.12.1994
(73) Titulaire: VALEO SYSTEMES D'ESSUYAGE, 78320 La Verrière (FR)
(72) Inventeur: Eustache, Jean-Pierre, F-92160 Antony (FR)
(74) Mandataire: Gamonal, Didier

(56) Documents cités:
- FR-A- 1 227 106
- FR-A- 2 143 398
- GB-A- 1 046 640
- GB-A- 1 075 222
- US-A- 3 227 001

## Description

La présente invention concerne un dispositif d'essuie-glace, du type comportant une articulation pour une manivelle reliée par un axe de rotation avec une bielle.

L'invention concerne plus particulièrement un dispositif d'essuie-glace à balayage non circulaire utilisant une telle articulation.

Il est connu de réaliser un tel balayage par un système de bielle/manivelle formant un quadrilatère déformable, comme cela est mieux décrit dans le brevet FR-A-1 546 319.

Dans ce cas, la manivelle est constituée par un des côtés du quadrilatère et la bielle, articulée sur cette manivelle, est constituée par une partie d'un bras d'essuie-glace portant un balai d'essuie-glace.

Dans les dispositifs de l'Art antérieur tel que ceux décrits dans le document FR-A-1 227 106, la manivelle et la bielle sont reliées par un axe de rotation qui présente une tête, un premier tronçon cylindrique et un deuxième tronçon cylindrique d'un diamètre inférieur, la tête et les deux tronçons étant coaxiaux, ledit axe comprenant une déformation à son extrémité opposée à la tête pour assurer la liaison de la manivelle et de la bielle ainsi que la fixation de l'axe sur la bielle.

Il est connu de relier le deuxième tronçon à la bielle par rivetage de l'extrémité dudit tronçon mais la demanderesse a constaté qu'un tel mode de liaison présentait différents inconvénients.

En premier lieu, les contraintes axiales exercées sur l'axe de rotation, lors de l'opération de rivetage, provoquent un affaiblissement de la bielle par enfoncement de la tête de l'extrémité du second tronçon dans la matière constitutive de la bielle.

De plus, la bielle et la manivelle étant en un matériau léger, en particulier à base de zamac, alors que l'axe est en un matériau dur, on a pu constater qu'il se produisait un phénomène d'usure de la manivelle sur l'axe de rotation.

Ce phénomène d'usure réduit la durée de vie du dispositif d'essuyage ou conduit à une dégradation des qualités mécaniques de l'articulation.

L'objet de la présente invention est de remédier à ces inconvénients en proposant un dispositif d'essuie-glace comportant une articulation réduisant les contraintes sur la bielle et supprimant le phénomène d'usure.

A cet effet, l'invention concerne un dispositif d'essuie-glace du type défini dans le préambule de la revendication 1 et divulgué dans FR-A-1 227 106. Ce dispositif est caractérisé en ce qu'il comporte une bague disposée dans la manivelle et traversée par le premier tronçon, un élément de renfort porté par la bielle et traversée par le second tronçon et au moins une rondelle immobilisée en rotation par rapport à la manivelle et intercalée entre la tête et la surface frontale correspondante de la bague.

Grâce à l'invention, lors de l'assemblage, la pression exercée axialement sur l'axe de rotation se traduit par un effort transmis essentiellement à un élément de renfort, qui peut être réalisé en un matériau beaucoup plus rigide, par exemple de l'acier ou du bronze et l'usure de la bielle et/ou de la manivelle est réduite du fait de la présence de rondelle.

Selon un mode de réalisation de l'invention, le dispositif comprend une seconde rondelle immobilisée en rotation par rapport à la manivelle et intercalée entre la surface frontale de l'élément de renfort et la surface frontale correspondante de la bague.

De ce fait, la rondelle empêche le contact de la manivelle sur la bielle et limite l'usure de ces deux pièces.

Selon un autre mode de réalisation de l'invention, l'élément de renfort consiste en un insert porté par la bielle.

Selon un autre mode de réalisation de l'invention, l'élément de renfort consiste en deux plaques disposées de part et d'autre de la bielle.

Grâce à ces caractéristiques, les efforts de rivetage sont transmis directement à l'élément de renfort sans atteindre la bielle.

Selon un autre mode de réalisation de l'invention, la rondelle présente un perçage central et un bord extérieur non circulaire pour l'immobilisation en rotation.

Selon un autre mode de réalisation de l'invention, la rondelle présente un bord extérieur cranté pour l'immobilisation en rotation.

Selon un autre mode de réalisation de l'invention, la rondelle présente une excroissance faisant saillie pour l'immobilisation en rotation.

Selon un autre mode de réalisation de l'invention, la rondelle présente une encoche pour l'immobilisation en rotation.

Les autres caractéristiques et avantages de l'invention vont ressortir maintenant de la description qui va suivre en se référant aux dessins annexés sur lesquels :
- la figure 1 représente une vue en coupe d'une articulation selon un premier mode de réalisation ;
- les figures 2 et 3 représentent des vues de face de deux exemples de réalisation de rondelles pour la mise en oeuvre de l'invention ;
- les figures 4 à 6 représentent des vues en coupe selon d'autres modes de réalisation.

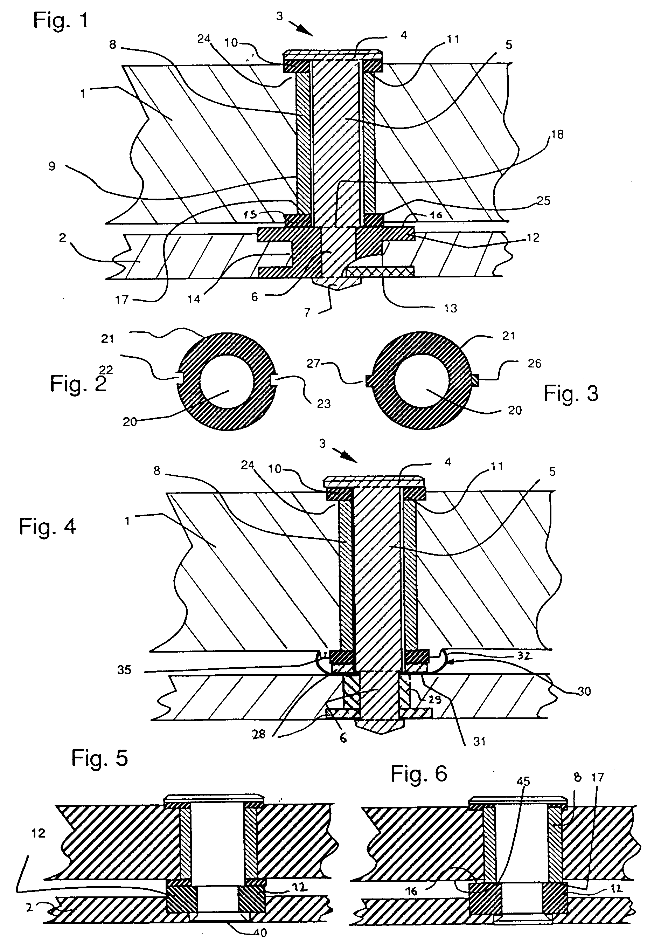

En se référant à la figure 1, l'articulation est destinée à assurer la liaison entre une manivelle 1 et une bielle 2, toutes deux mobiles en rotation relative autour d'un axe de rotation 3.

En pratique, la manivelle 1 et la bielle 2 sont réalisées en zamac ou en matière plastique et l'axe de pivotement 3 est constitué par une pièce cylindrique en un matériau rigide, ici en acier inoxydable.

L'axe 3 présente une tête 4, un premier tronçon cylindrique 5 et un second tronçon cylindrique 6 d'un diamètre inférieur au diamètre du premier tronçon.

L'extrémité 7 opposée à la tête 4 est déformée de façon connue, par exemple par rivetage pour assurer la liaison de la manivelle 1 et de la bielle 2 et pour assurer la fixation de l'axe 3 sur la bielle 2.

Le premier tronçon 5 traverse une bague cylindrique 8 réalisée par exemple en bronze ou constituée par un roulement à aiguilles, cette bague étant logée dans un alésage 9 qui traverse la manivelle 1.

Comme visible sur la figure 1, une première rondelle 10, en un matériau de frottement, est intercalée entre la tête 4 et la surface frontale 11 correspondante de la bague 8 et présente un diamètre extérieur sensiblement égal au diamètre de la tête 4 et un diamètre intérieur sensiblement égal au diamètre du premier tronçon 5.

La manivelle 1 présente un lamage 24 de forme complémentaire à la section de la rondelle 10 et d'une profondeur au plus égale à l'épaisseur de ladite rondelle.

Cette rondelle est immobilisée en rotation par rapport à la manivelle 1. De ce fait, les frottements se produisent uniquement entre la surface inférieure de la tête 4 et la surface supérieure de la rondelle 10 en préservant ainsi la manivelle d'une éventuelle usure par frottement de la rondelle.

Un insert 12 traverse la bielle 2 en étant surmoulée dans la bielle 2, cet insert étant réalisé en un matériau plus rigide que le matériau de la bielle.

De plus, cet insert présente un moletage 13 empêchant la rotation de l'insert par rapport à la bielle ainsi qu'une gorge 14 assurant son positionnement axial.

Une seconde rondelle 15, également en un matériau de frottement, est intercalée entre la surface frontale 16 de l'insert 12 et la surface frontale 17 correspondante de la bague 8.

Cette seconde rondelle présente un diamètre intérieur sensiblement égal au diamètre du premier tronçon 5 et la manivelle 1 présente un lamage 25 de forme complémentaire à la section extérieure de la rondelle 15 et d'une profondeur au plus égale à l'épaisseur de ladite rondelle.

Comme déjà mentionné pour la première rondelle la seconde rondelle 15 est immobilisée en rotation par rapport à la manivelle 1 et de ce fait les frottements se produisent uniquement entre la surface supérieure de l'insert 12 et la surface inférieure de la rondelle 15.

Comme décrit précédemment, l'assemblage de l'articulation comporte une phase d'écrasement de l'extrémité 7 de l'axe de rotation, écrasement réalisé lors d'une opération de rivetage.

Lors de cette opérations, les contraintes s'exercent principalement suivant une direction axiale uniquement sur le deuxième tronçon 6, ces contraintes sont transmises à l'insert 12 qui se trouve situé entre l'extrémité 7 écrasée et l'épaulement 18 formé par la jonction du premier et second tronçons, cet insert formant ainsi un élément de renfort de la bielle 2.

La figure 2 représente un premier exemple de réalisation d'une rondelle 10, 15 dans lequel celle-ci comporte un alésage intérieur 20 cylindrique et un bord périphérique 21 cylindrique présentant deux encoches 22, 23, ici diamètralement opposées.

Ces encoches 22, 23 coopèrent avec des protubérances complémentaires (non représentées) prévues au niveau des lamages 24, 25 de la manivelle 1 pour empêcher la rotation de cette rondelle.

La figure 3 représente un deuxième exemple de réalisation d'une rondelle 10, 15 qui comporte un alésage intérieur 20 cylindrique et un bord périphérique 21 cylindrique présentant deux protubérances 26, 27 prolongeant radialement la rondelle pour créer une dissymétrie empêchant la rotation de la rondelle dans son lamage, ces protubérances coopérant avec des évidements (non représentés) prévus en correspondance dans les lamages 24, 25, également pour empêcher la rotation de la rondelle dans le lamage qui la reçoit.

On se réfère maintenant à la figure 4 qui montre un autre mode de réalisation de l'invention.

Comme visible sur cette figure, l'élément de renfort est constitué de deux plaques 28, ici circulaires, disposées de part et d'autre de la bielle 2 en étant traversées par la deuxième portion 6, ces rondelles étant en un matériau plus rigide que celui de la bielle.

De préférence, mais non obligatoirement, il peut être prévu une douille 29, de même matériau que les rondelles 28, cette douille entourant la deuxième portion 6.

De plus il peut être prévu que l'articulation 3 comporte un joint 30 muni d'une partie centrale 31 pincée entre une rondelle 28, celle située en regard de la manivelle 1 et la face de la bielle 2 sur laquelle cette rondelle s'appuie.

La partie centrale 31 est prolongée par une partie tubulaire 32 s'appuyant sur un épaulement cylindrique 35 prévu sur la surface inférieure de la manivelle 1.

Dans l'exemple de réalisation de la figure 5, l'insert 12 présente une forme tubulaire qui est immobilisé en rotation par rapport à la bielle en ayant par exemple une forme non circulaire coopérant avec un évidement de forme complémentaire prévu dans la bielle 2 et l'extrémité de l'axe de rotation est écrasée sur cet insert pour présenter une extrémité 40 élargie assurant le blocage axial de l'axe par rapport à la bielle 2.

Comme représenté sur la figure 6, la surface frontale 17 de la bague 8 fait saillie par rapport à la surface inférieure 45 de la manivelle 1 et de ce fait, la friction se produit uniquement entre cette surface frontale 17 et la surface frontale 16 de l'insert 12.

L'invention telle que décrite jusqu'à maintenant n'est pas limitée aux exemples de réalisation mentionnés mais englobe toutes variantes.

Notamment, pour immobiliser en rotation les rondelles 10, 15 par rapport à la manivelle 1, il peut être envisagé que le pourtour extérieur desdites rondelles ne soit pas circulaire par exemple ce pourtour pouvant être de forme polygonale ou présentant une multiplicité de saillies venant en coopération avec une multiplicité d'évidements complémentaires.

## Revendications

1. Dispositif d'essuie-glace du type comportant une articulation pour une manivelle (1) reliée par un axe de rotation (3) avec une bielle (2), ledit axe présentant une tête (4), un premier tronçon (5) cylindrique et un second tronçon (6) cylindrique d'un diamètre inférieur, la tête et les deux tronçons étant coaxiaux, ledit axe comprenant une déformation à son extrémité (7) opposé à la tête (4) pour assurer la liaison de la manivelle (1) et de la bielle (2) ainsi que la fixation de l'axe (3) sur la bielle (2), caractérisé en ce que le dispositif comporte une bague (8) disposée dans la manivelle (1) et traversée par le premier tronçon (5) , un élément de renfort (12 ; 28, 29) porté par la bielle (2) et traversée par le second tronçon (6) et au moins une rondelle (10) immobilisée en rotation par rapport a la manivelle et intercalée entre la tête (4) et la surface frontale correspondante de la bague (8).

2. Dispositif selon la revendication 1, caractérisé en ce que le dispositif comprend une seconde rondelle (15) immobilisée en rotation par rapport à la manivelle et intercalée entre la surface frontale de l'élément de renfort (12 ; 28, 29) et la surface frontale correspondante de la bague (8).

3. Dispositif selon l'une des revendications précédentes, caractérisé en ce que l'élément de renfort consiste en un insert (12) porté par la bielle (2).

4. Dispositif selon l'une des revendications précédentes, caractérisé en ce que l'élément de renfort consiste en deux plaques (28) disposées de part et d'autre de la bielle (2).

5. Dispositif selon l'une des revendications précédentes, caractérisé en ce que la rondelle (10,15) présente un perçage central circulaire (20) et un bord extérieur (21) non circulaire pour l'immobilisation en rotation.

6. Dispositif selon l'une des revendications précédentes, caractérisé en ce que la rondelle (10,15) présente un bord extérieur cranté pour l'immobilisation en rotation.

7. Dispositif selon l'une des revendications précédentes, caractérisé en ce que la rondelle (10,15) présente une excroissance (26,27) faisant saillie pour l'immobilisation en rotation.

8. Dispositif selon l'une des revendications précédentes, caractérisé en ce que la rondelle (10,15) présente une encoche (22,23) pour l'immobilisation en rotation.

9. Dispositif selon l'une des revendications précédentes, caractérisé en ce qu'il comporte un joint d'étanchéité (30) muni d'une partie centrale solidaire de l'élément de renfort (12 ; 28,29) et une partie tubulaire (32) s'appuyant radialement sur un prolongement cylindrique (35) de la manivelle (1).

## Claims

1. Screen wiping apparatus of the type including an articulation for a crank (1) which is coupled by means of a pivot axis element (3) to a crank arm (2), the said axis element having a head (4), a first cylindrical shank portion (5) and a second cylindrical shank portion (6) of smaller diameter, the head and the two shank portions being coaxial, the said axis element having a deformation at its end (7) opposite to the head (4), for coupling the crank (1) and the crank arm (2) together and for fastening the axis element (3) on the crank arm (2), characterised in that the apparatus includes a sleeve (8) disposed within the crank (1), with the first shank portion (5) passing through the sleeve, a reinforcing element (12; 28, 29) carried by the crank arm (2), with the second shank portion (6) extending through the reinforcing element, and at least one ring (10) immobilised against rotation with respect to the crank and interposed between the head (4) and the corresponding anterior surface of the sleeve (8).

2. Apparatus according to Claim 1, characterised in that the apparatus includes a second ring (15) which is immobilised against rotation with respect to the crank, and which is interposed between the anterior surface of the reinforcing element (12: 28, 29) and the corresponding anterior surface of the sleeve (8).

3. Apparatus according to one of the preceding Claims, characterised in that the reinforcing element consists of an insert (12) carried by the crank arm (2).

4. Apparatus according to one of the preceding Claims, characterised in that the reinforcing element consists of two plate members (28) disposed on either side of the crank arm (2).

5. Apparatus according to one of the preceding Claims, characterised in that the ring (10, 15) has a circular central bore (20) and a non-circular external edge (21) for preventing its rotation.

6. Apparatus according to one of the preceding Claims, characterised in that the ring (10, 15) has a notched outer edge for preventing its rotation.

7. Apparatus according to one of the preceding Claims, characterised in that the ring (10, 15) has a projecting element (26, 27) for preventing its rotation.

8. Apparatus according to one of the preceding Claims, characterised in that the ring (10, 15) has a notch (22, 23) for preventing its rotation.

9. Apparatus according to one of the preceding Claims, characterised in that it includes a sealing ring (30) having a central portion fixed to the reinforcing element (12; 28, 29) and a tubular portion (32) bearing radially on a cylindrical extension (35) of the crank (1).

## Patentansprüche

1. Scheibenwischer mit einer Gelenkverbindung für eine Kurbel (1), die durch eine Drehachse (3) mit einer Gelenkstange (2) verbunden ist, wobei die besagte Achse einen Kopf (4), ein erstes zylindrisches Teilstück (5) und ein zweites zylindrisches Teilstück (6) mit einem kleineren Durchmesser aufweist, wobei die besagte Achse eine Verformung an ihrem dem Kopf (4) gegenüberliegenden Ende (7) umfaßt, um die Verbindung der Kurbel (1) und der Gelenkstange (2) sowie die Befestigung der Achse (3) an der Gelenkstange (2) herbeizuführen , **dadurch gekennzeichnet,** daß der Scheibenwischer einen Ring (8), der in der Kurbel (1) angeordnet ist und durch den das erste Teilstück (5) hindurchgeht, ein Verstärkungselement (12; 28, 29), das an der Gelenkstange (2) angebracht ist und durch das zweite Teilstück (6) hindurchgeht, und mindestens eine Scheibe (10) umfaßt, die gegen Verdrehung im Verhältnis zur Kurbel gesichert und zwischen dem Kopf (4) und der entsprechenden Stirnfläche des Rings (8) eingefügt ist.

2. Scheibenwischer nach Anspruch 1 , **dadurch gekennzeichnet,** daß er eine zweite Scheibe (15) umfaßt, die gegen Verdrehung im Verhältnis zur Kurbel gesichert und zwischen der Stirnfläche des Verstärkungselements (12; 28, 29) und der entsprechenden Stirnfläche des Rings (8) eingefügt ist.

3. Scheibenwischer nach einem der vorangehenden Ansprüche, **dadurch gekennzeichnet,** daß das Verstärkungselement aus einem Einsatz (12) besteht, der an der Gelenkstange (2) angebracht ist.

4. Scheibenwischer nach einem der vorangehenden Ansprüche, **dadurch gekennzeichnet,** daß das Verstärkungselement aus zwei Platten (28) besteht, die beiderseits der Gelenkstange (2) angeordnet sind.

5. Scheibenwischer nach einem der vorangehenden Ansprüche, **dadurch gekennzeichnet,** daß die Scheibe (10, 15) eine kreisförmige mittige Bohrung (20) und eine nicht kreisförmige Außenkante (21) für die Drehsicherung aufweist.

6. Scheibenwischer nach einem der vorangehenden Ansprüche, **dadurch gekennzeichnet,** daß die Scheibe (10, 15) eine gerastete Außenkante für die Drehsicherung aufweist.

7. Scheibenwischer nach einem der vorangehenden Ansprüche, **dadurch gekennzeichnet,** daß die Scheibe (10, 15) eine vorspringende Ausstülpung (26, 27) für die Drehsicherung aufweist.

8. Scheibenwischer nach einem der vorangehenden Ansprüche, **dadurch gekennzeichnet,** daß die Scheibe (10, 15) eine Ausklinkung (22, 23) für die Drehsicherung aufweist.

9. Scheibenwischer nach einem der vorangehenden Ansprüche, **dadurch gekennzeichnet,** daß er eine Dichtung (30) mit einem Mittelteil, der fest mit dem Verstärkungselement (12; 28, 29) verbunden ist, und einem rohrförmigen Teil (32) aufweist, der radial an einer zylindrischen Verlängerung (35) der Kurbel (1) anliegt.
